# EUROPÄISCHE PATENTSCHRIFT

(11) **EP 2 623 390 B1**
(45) Veröffentlichungstag und Bekanntmachung des Hinweises auf die Patenterteilung: **17.06.2015**
(21) Anmeldenummer: 13150741.0
(22) Anmeldetag: 10.01.2013
(51) Int. Cl.: B61D 17/06

(54) **Verkleidungseinrichtung für einen Endbereich eines Schienenfahrzeugs und entsprechendes Schienenfahrzeug**
Car body for an end section of a rail vehicle and corresponding rail vehicle
Elément de carrosserie pour une zone d'extrémité d'un véhicule sur rail et véhicule sur rail correspondant

(30) Priorität: 02.02.2012 DE 102012201569
(43) Veröffentlichungstag der Anmeldung: 07.08.2013
(73) Patentinhaber: Siemens Aktiengesellschaft, 80333 München (DE)
(72) Erfinder: Ali, Irfan, 47800 Krefeld (DE)

(56) Entgegenhaltungen:
- EP-A1- 2 208 655
- WO-A1-2011/154527

## Beschreibung

Die Erfindung betrifft eine Verkleidungseinrichtung für einen als Bug- und Heckbereich ausgebildeten Endbereich eines Schienenfahrzeugs, das alleine oder in einem Fahrzeugverband in beide Fahrtrichtungen gleichwertig betreibbar ist. Ein solches in beide Fahrtrichtungen gleichwertig betreibbares Schienenfahrzeug oder ein solcher Fahrzeugverband wird auch als Wendezug bezeichnet. Die Verkleidungseinrichtung weist bewegliche Klappen auf, die in einem ersten Zustand der Verkleidungseinrichtung einen Teil der geschlossenen Außenoberfläche am Endbereich des Schienenfahrzeugs bilden, wobei die Verkleidungseinrichtung durch ein Bewegen der Klappen in mindestens einen weiteren Zustand überführbar ist.

Die Erfindung betrifft weiterhin ein Schienenfahrzeug, das alleine oder in einem Fahrzeugverband in beide Fahrtrichtungen gleichwertig betreibbar ist, mit mindestens einer Verkleidungseinrichtung an seinem Bug- und/oder Heckbereich.

Eine derartige Verkleidungseinrichtung ist zum Beispiel aus der DE 10 2009 041 445 A1 bekannt. Diese Verkleidungseinrichtung ist eine Verkleidungseinrichtung zur sich öffnen lassenden Verkleidung einer Kupplungsvorrichtung eines Schienenfahrzeugs mit zwei beweglichen Klappen. In einem ersten Zustand der Verkleidungseinrichtung bilden die Klappen einen Teil der geschlossenen Außenoberfläche am Bug beziehungsweise Heck des Schienenfahrzeugs und verkleiden eine im Bug oder Heck des Schienenfahrzeugs angeordnete Kupplungsvorrichtung vollständig. In einem geöffneten weiteren Zustand der Verkleidungseinrichtung ermöglichen die Klappen einen Gebrauch der Kupplungsvorrichtung, wobei die Bewegung beider Klappen eine Schwenkbewegungskomponente bezüglich einer jeweiligen horizontal verlaufenden Achse aufweist.

Insbesondere bei Hochgeschwindigkeitszügen, also Schienenfahrzeugen und Schienenfahrzeug-Zugverbänden, die Höchstgeschwindigkeiten von 200 km/h oder mehr erreichen, richtet sich die Formgestaltung des Fahrzeugbugs und des Fahrzeughecks nach aerodynamischen Kriterien. Um einen Zugverband bilden zu können, weisen die Fahrzeuge jedoch meist eine Kupplungsvorrichtung auf, die von der Verkleidungseinrichtung abgedeckt wird, wenn sie nicht in Gebrauch ist. Am Bug befindet sich die Verkleidungseinrichtung vor der Kupplungsvorrichtung, sodass die Klappe oder die Klappen einen für die Aerodynamik besonders wichtigen Teil der Außenoberfläche bildet/bilden.

Da die Kupplungsvorrichtung während des Gebrauchs, d. h. während das Schienenfahrzeug mit einem anderen Schienenfahrzeug gekuppelt ist, über einen verhältnismäßig großen Winkelbereich verschwenkbar sein muss, erstrecken sich die Klappen in horizontaler Richtung über einen großen Bereich des Bugs (oder bei entgegengesetzter Fahrtrichtung des Hecks).

Die Gestalt der Außenoberfläche der Verkleidungseinrichtung im ersten Zustand ist bezüglich ihrer Aerodynamik so gewählt, dass sie für die Nutzung sowohl im Bug- als auch im Heckbereich gut nutzbar ist.

Aufgabe der vorliegenden Erfindung ist es, eine Verkleidungseinrichtung für ein Schienenfahrzeug und ein entsprechendes Schienenfahrzeug anzugeben, die ein Schienenfahrzeug mit verbesserter Aerodynamik schaffen.

Die Lösung der Aufgabe erfolgt durch die Merkmale der unabhängigen Ansprüche 1 und 8. Vorteilhafte Ausgestaltungen sind in den Unteransprüchen angegeben.

Bei der erfindungsgemäßen Verkleidungseinrichtung ist vorgesehen, dass zumindest eine der beweglichen Klappen in einem geöffneten weiteren Zustand der Verkleidungseinrichtung und/oder einem geschlossenen weiteren Zustand der Verkleidungseinrichtung mindestens eine gegenüber der geschlossenen Außenoberfläche der Verkleidungseinrichtung im ersten Zustand hinausragende Spoiler-Struktur bildet. Die Verkleidungseinrichtung ist eine Bug-/Heckverkleidungseinrichtung des Schienenfahrzeugs, das alleine oder in einem Fahrzeugverband in beide Fahrtrichtungen gleichwertig betreibbar ist. Ein solches in beide Fahrtrichtungen gleichwertig betreibbares Schienenfahrzeug oder ein solcher Fahrzeugverband wird auch als Wendezug bezeichnet.

Der als Bug- und Heckbereich ausgebildete Endbereich ist ein wahlweise als Bug- und als Heckbereich ausbildbarer/ausgebildeter Endbereich. Diese Wahl erfolgt durch die Wahl der Fahrtrichtung.

Die zumindest eine bewegliche Klappe, die die Spoiler-Struktur bildet, weist bevorzugt eine Schwenkbewegungskomponente bezüglich einer horizontal verlaufenden Achse auf.

Die Gestalt der Außenoberfläche der Verkleidungseinrichtung im ersten Zustand ist bezüglich ihrer Aerodynamik so gewählt, dass sie zumindest für die Nutzung im Bugbereich gut nutzbar ist. Bevorzugt ist sie jedoch für die Nutzung sowohl im Bugals auch im Heckbereich gut nutzbar.

Als Spoiler wird ein Fahrzeugteil eines Fahrzeugs bezeichnet, das die Fahrzeugumströmung gezielt verändert. Die Spoiler-Struktur ist dementsprechend eine Struktur des Fahrzeugs zur gezielten Veränderung der Fahrzeugumströmung. Die Funktion einer solchen Spoiler-Struktur ist hauptsächlich die eines Luftabweisers oder Luftablenkers und muss im Zusammenspiel mit der Aerodynamik der übrigen Fahrzeugkarosserie betrachtet werden.

Im einfachsten Fall sind nur zwei Zustände der Verkleidungseinrichtung vorgesehen, nämlich der erste Zustand und der geöffnete weitere Zustand. Dabei bildet die zumindest eine Klappe in dem geöffneten weiteren Zustand eine gegenüber der geschlossenen Außenoberfläche der Verkleidungseinrichtung im ersten Zustand hinausragende Spoiler-Struktur.

Gemäß einer bevorzugten Ausführungsform der Erfindung bildet die Spoiler-Struktur oder zumindest eine der mehreren Spoiler-Strukturen einen Heckspoiler für das Schienenfahrzeug. Der entsprechende weitere Zustand der Verkleidungseinrichtung wird im Heckbereich des Fahrzeugs genutzt.

Gemäß einer weiteren bevorzugten Ausführungsform der Erfindung ist vorgesehen, dass die Spoiler-Struktur oder zumindest eine der mehreren Spoiler-Strukturen eine Spoiler-Struktur zur Verringerung von Auftriebskräften ist.

Gemäß noch einer weiteren bevorzugten Ausführungsform der Erfindung ist vorgesehen, dass die Spoiler-Struktur oder zumindest eine der mehreren Spoiler-Strukturen eine Spoiler-Struktur zur Verringerung des Gesamtluftwiderstandes des Fahrzeugs ist.

Gemäß einer bevorzugten Ausgestaltung der Erfindung ist die Spoiler-Struktur oder zumindest eine der mehreren Spoiler-Strukturen eine Spoiler-Struktur zur Verringerung der Strömungsgeschwindigkeiten im Bereich des Gleisbettes.

Mit Vorteil ist vorgesehen, dass die beweglichen Klappen alle eine bezüglich jeweiliger horizontal verlaufender Achsen verlaufende Schwenkbewegungskomponente aufweisen.

Bevorzugt ist zumindest eine der beweglichen Klappen als mehrteilige Klappe ausgebildet.

Gemäß einer weiteren bevorzugten Ausgestaltung der Erfindung ist vorgesehen, dass die beweglichen Klappen in dem ersten Zustand der Verkleidungseinrichtung eine im Endbereich angeordnete Kupplungsvorrichtung vollständig abdecken und dass die beweglichen Klappen in dem geöffneten weiteren Zustand der Verkleidungseinrichtung einen Gebrauch der Kupplungsvorrichtung ermöglichen. Die Verkleidungseinrichtung ist also eine Verkleidungseinrichtung zur öffenbaren (sich öffnen lassenden) Verkleidung einer Kupplungsvorrichtung des Schienenfahrzeugs.

Insbesondere decken die beweglichen Klappen in dem geschlossenen weiteren Zustand der Verkleidungseinrichtung die Kupplungsvorrichtung ganz oder zumindest teilweise ab.

Bei dem erfindungsgemäßen Schienenfahrzeug ist vorgesehen, dass die mindestens eine Verkleidungseinrichtung als eine vorstehend genannte Verkleidungseinrichtung ausgebildet ist. Generell kann das Schienenfahrzeug ein Schienenfahrzeug für den Betrieb bei jedweder Geschwindigkeit sein. Insbesondere ist das Schienenfahrzeug jedoch ein Schienenfahrzeug eines Hochgeschwindigkeitszugs oder Teil eines Schienenfahrzeug-Zugverbandes eines Hochgeschwindigkeitszugs.

Gemäß einer bevorzugten Ausgestaltung des erfindungsgemäßen Schienenfahrzeugs ist dieses Schienenfahrzeug mit mindestens einem weiteren Schienenfahrzeug, das mindestens eine entsprechende Kupplungsvorrichtung und mindestens eine identische Verkleidungseinrichtung aufweist, zu einem Zugverband (Fahrzeugverband) kuppelbar.

Nachfolgend werden Ausführungsbeispiele der Erfindung anhand von Zeichnungen näher erläutert. Darin zeigt
- Fig. 1: die schematische Darstellung des Endbereichs eines Schienenfahrzeugs mit einer Verkleidungseinrichtung in einem ersten Zustand gemäß einer bevorzugten Ausführungsform der Erfindung,
- Fig. 2: die schematische Darstellung des in Fig. 1 gezeigten Endbereichs mit der Verkleidungseinrichtung in einem geöffneten zweiten Zustand und
- Fig. 3: die schematische Darstellung des in den Figuren 1 und 2 gezeigten Endbereichs mit der Verkleidungseinrichtung in einem dritten Zustand.

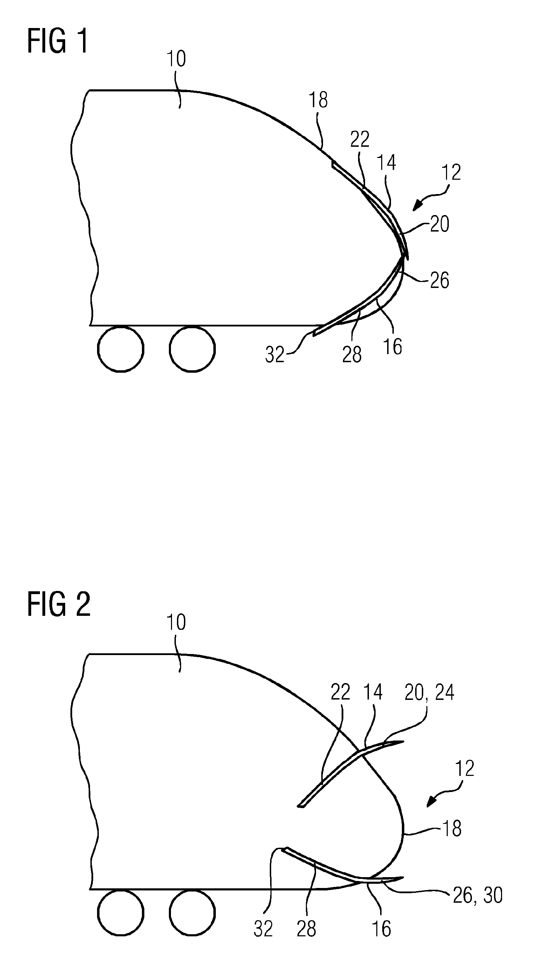

Die Figur 1 zeigt einen Schnitt durch einen Endbereich eines Schienenfahrzeugs 10 mit einer Verkleidungseinrichtung 12 zur Veränderung der Form der Verkleidung des Endbereichs (formveränderbare Verkleidungseinrichtung) für den als Bug- bzw. Heckbereich ausgebildeten Endbereich des Schienenfahrzeugs 10. Die Verkleidungseinrichtung 12 ist in den gezeigten Beispielen eine Verkleidungseinrichtung 12 zur sich öffnen lassenden Verkleidung einer (nicht gezeigten) Kupplungsvorrichtung des Schienenfahrzeugs 10 in einem ersten Zustand. Die Verkleidungseinrichtung 12 weist zwei bewegliche Klappen 14, 16 auf, die in dem ersten Zustand der Verkleidungseinrichtung 12 einen Teil der geschlossenen Außenoberfläche 18 am Bug oder Heck des Schienenfahrzeugs 10 bilden und die im Bug oder Heck des Schienenfahrzeugs 10 angeordnete Kupplungsvorrichtung vollständig abdecken/Verkleiden. Jede der Klappen 14, 16 ist mittels eines zugeordneten Antriebs (nicht gezeigt) und einer die Antriebsbewegung dieses Antriebs in die Bewegung der jeweils angetriebenen Klappe 14, 16 umsetzenden Kulisse (ebenfalls nicht gezeigt) antreibbar. Durch die resultierenden Stellungswechsel der Klappen 14, 16 ergeben sich die unterschiedlichen Zustände der Verkleidungseinrichtung 12, von denen -wie gesagt- der erste Zustand in Fig. 1 dargestellt ist. Die resultierenden Bewegung jeder der beiden Klappen 14, 16 ist eine Bewegung die eine jeweilige Schwenkbewegungskomponente bezüglich einer zugeordneten horizontal verlaufenden Achse (ebenfalls nicht gezeigt) aufweist.

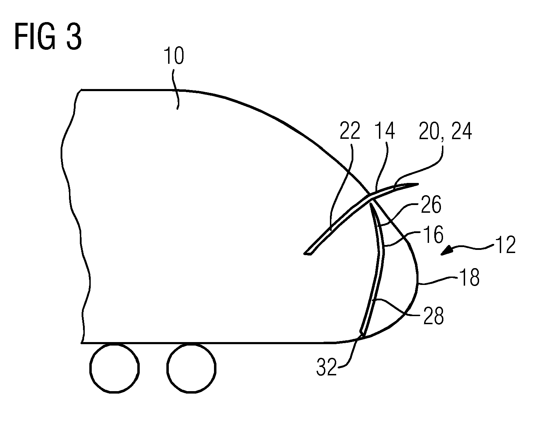

Die weiteren Figuren 2 und 3 zeigen den Endbereich des Schienenfahrzeugs 10 der Fig. 1 in identischer Darstellung, wobei sich lediglich der Zustand der Verkleidungseinrichtung 12 ändert, sodass bei der Beschreibung dieser Figuren nur auf die Unterschiede zur Fig. 1 näher eingegangen wird.

In Fig. 2 ist der Endbereich des Schienenfahrzeugs 10 mit der Verkleidungseinrichtung 12 in einem weiteren Zustand (zweiter Zustand) gezeigt. In diesem geöffneten weiteren Zustand der Verkleidungseinrichtung 12 ist ein Gebrauch der Kupplungsvorrichtung möglich. Die beiden Klappen 14, 16 sind gegenüber dem in Fig. 1 dargestellten ersten Zustand maulartig geöffnet.

Dazu ist ein zum Fahrzeugende weisender äußerer Endabschnitt 20 der oberen der beiden Klappen 14 beim verschwenken angehoben und ein zum Rumpf des Fahrzeugs 10 weisender innerer Endabschnitt 22 abgesenkt. Der äußere Endabschnitt 20 bildet im zweiten Zustand der Verkleidungseinrichtung 12 eine gegenüber der geschlossenen Außenoberfläche 18 der Verkleidungseinrichtung 12 im ersten Zustand hinausragende (erste) Spoiler-Struktur 24. Diese Spoiler-Struktur 24 ist eine Spoiler-Struktur zur Verringerung des Gesamtluftwiderstandes des Fahrzeugs 10.

Weiterhin ist ein zum Fahrzeugende weisender äußerer Endabschnitt 26 der unteren der beiden Klappen 16 beim verschwenken abgesenkt und ein zum Rumpf des Fahrzeugs 10 weisender innerer Endabschnitt 28 angehoben. Der äußere Endabschnitt 26 der unteren Klappe 16 bildet im zweiten Zustand der Verkleidungseinrichtung 12 eine gegenüber der geschlossenen Außenoberfläche 18 der Verkleidungseinrichtung 12 im ersten Zustand hinausragende (zweite) Spoiler-Struktur 30. Diese Spoiler-Struktur 30 ist eine Spoiler-Struktur zur Verringerung der Strömungsgeschwindigkeiten im Bereich des (unterhalb des Schienenfahrzeugs 10 befindlichen) Gleisbettes.

In Fig. 3 ist der Endbereich des Schienenfahrzeugs 10 mit der Verkleidungseinrichtung 12 in einem geschlossenen weiteren Zustand (dritter Zustand) gezeigt. In diesem dritten Zustand der Verkleidungseinrichtung 12 decken die Klappen 14, 16 die Kupplungsvorrichtung zumindest teilweise ab. Die obere der beiden Klappen 14 ist entsprechend der in Fig. 2 dargestellten Position des zweiten Zustandes der Verkleidungseinrichtung 12 angeordnet, während die untere der Klappen 16 soweit hochgeklappt ist, dass sie die Kupplungsvorrichtung (zusammen mit der oberen Klappe 14) abdeckt.

Ausgehend von dem ersten Zustand der Verkleidungseinrichtung 12 ist dazu der zum Fahrzeugende weisender äußerer Endabschnitt 20 der oberen der beiden Klappen 14 beim Verschwenken angehoben und ein zum Rumpf des Fahrzeugs 10 weisender innerer Endabschnitt 22 abgesenkt. Der äußere Endabschnitt 20 bildet auch im dritten Zustand der Verkleidungseinrichtung 12 eine gegenüber der geschlossenen Außenoberfläche 18 der Verkleidungseinrichtung 12 im ersten Zustand hinausragende Spoiler-Struktur 24. Diese Spoiler-Struktur 24 ist eine Spoiler-Struktur zur Verringerung des Gesamtluftwiderstandes des Fahrzeugs 10.

Weiterhin ist die untere der beiden Klappen 16 bezüglich der leicht verschobenen Endkante 32 des inneren Endabschnitts 28 beim Verschwenken komplett hochgeschwenkt (hochgeklappt). Die untere Klappe 16 bildet dabei im dritten Zustand der Verkleidungseinrichtung 12 der gezeigten Ausführungsform keinen Spoiler.

## Patentansprüche

1. Verkleidungseinrichtung (12) für einen als Bug- und Heckbereich ausgebildeten Endbereich eines Schienenfahrzeugs (10), das alleine oder in einem Fahrzeugverband in beide Fahrtrichtungen gleichwertig betreibbar ist, mit beweglichen Klappen (14, 16), die in einem ersten Zustand der Verkleidungseinrichtung (12) einen Teil der geschlossenen Außenoberfläche (18) am Endbereich des Schienenfahrzeugs (10) bilden, wobei die Verkleidungseinrichtung (12) durch ein Bewegen der Klappen (14, 16) in mindestens einen weiteren Zustand überführbar ist,
**dadurch gekennzeichnet dass**
zumindest eine der beweglichen Klappen (14, 16) in einem geöffneten weiteren Zustand der Verkleidungseinrichtung (12) und/oder einem geschlossenen weiteren Zustand der Verkleidungseinrichtung (12) mindestens eine gegenüber der geschlossenen Außenoberfläche (18) der Verkleidungseinrichtung im ersten Zustand hinausragende Spoiler-Struktur (24, 30) bildet.

2. Verkleidungseinrichtung nach Anspruch 1, **dadurch gekennzeichnet, dass** die Spoiler-Struktur oder zumindest eine der mehreren Spoiler-Strukturen (24, 30) einen Heckspoiler für das Schienenfahrzeug (10) bildet.

3. Verkleidungseinrichtung nach Anspruch 1 oder 2, **dadurch gekennzeichnet, dass** die Spoiler-Struktur oder zumindest eine der mehreren Spoiler-Strukturen (24) eine Spoiler-Struktur zur Verringerung von Auftriebskräften ist.

4. Verkleidungseinrichtung nach einem der Ansprüche 1 bis 3, **dadurch gekennzeichnet, dass** die Spoiler-Struktur oder zumindest eine der mehreren Spoiler-Strukturen (24, 30) eine Spoiler-Struktur zur Verringerung des Gesamtluftwiderstandes des Fahrzeugs ist.

5. Verkleidungseinrichtung nach einem der Ansprüche 1 bis 4, **dadurch gekennzeichnet, dass** die Spoiler-Struktur oder zumindest eine der mehreren Spoiler-Strukturen (30) eine Spoiler-Struktur zur Verringerung der Strömungsgeschwindigkeiten im Bereich des Gleisbettes ist.

6. Verkleidungseinrichtung nach einem der Ansprüche 1 bis 5, **dadurch gekennzeichnet, dass** die beweglichen Klappen (14, 16) in dem ersten Zustand der Verkleidungseinrichtung (12) eine im Endbereich angeordnete Kupplungsvorrichtung vollständig abdecken und dass die beweglichen Klappen (14, 16) in dem geöffneten weiteren Zustand der Verkleidungseinrichtung (12) einen Gebrauch der Kupplungsvorrichtung ermöglichen.

7. Verkleidungseinrichtung nach Anspruch 6, **dadurch gekennzeichnet, dass** die beweglichen Klappen (14, 16) in dem geschlossenen weiteren Zustand der Verkleidungseinrichtung (12) die Kupplungsvorrichtung ganz oder zumindest teilweise abdecken.

8. Schienenfahrzeug, das alleine oder in einem Fahrzeugverband in beide Fahrtrichtungen gleichwertig betreibbar ist, mit mindestens einer Verkleidungseinrichtung (12) an seinem Bug- und/oder Heckbereich, **dadurch gekennzeich** n e t , dass die mindestens eine Verkleidungseinrichtung (12) nach mindestens einem der vorhergehenden Ansprüche ausgebildet ist.

9. Schienenfahrzeug nach Anspruch 8, **dadurch gekennzeichnet, dass** das Schienenfahrzeug (10) mindestens eine Kupplungsvorrichtung aufweist, die von der Verkleidungseinrichtung (12) öffenbar abgedeckt wird.

10. Schienenfahrzeug nach Anspruch 9, **dadurch gekennzeichnet, dass** diese Schienenfahrzeug mit mindestens einem weiteren Schienenfahrzeug, das mindestens eine entsprechende Kupplungsvorrichtung und mindestens eine identische Verkleidungseinrichtung (12) aufweist, zu einem Zugverband kuppelbar ist.

## Claims

1. Fairing device (12) for an end region, embodied as a front region and rear region, of a rail vehicle (10) which can be operated in an equivalent fashion alone or in a vehicle configuration in both directions of travel, having movable flaps (14, 16) which, in a first state of the fairing device (12), form part of the closed external surface (18) at the end region of the rail vehicle (10), wherein the fairing device (12) can be changed into at least one further state by moving the flaps (14, 16),
**characterized in that**
in an opened further state of the fairing device (12) and/or a closed further state of the fairing device (12) at least one of the movable flaps (14, 16) forms at least one spoiler structure (24, 30) which projects out with respect to the closed external surface (18) of the fairing device in the first state.

2. Fairing device according to Claim 1, **characterized in that** the spoiler structure or at least one of the plurality of spoiler structures (24, 30) forms a rear spoiler for the rail vehicle (10).

3. Fairing device according to Claim 1 or 2, **characterized in that** the spoiler structure or at least one of the plurality of spoiler structures (24) is a spoiler structure for reducing lifting forces.

4. Fairing device according to one of Claims 1 to 3, **characterized in that** the spoiler structure or at least one of the plurality of spoiler structures (24, 30) is a spoiler structure for reducing the total air resistance of the vehicle.

5. Fairing device according to one of Claims 1 to 4, **characterized in that** the spoiler structure or at least one of the plurality of spoiler structures (30) is a spoiler structure for reducing the flow rates in the region of the track bed.

6. Fairing device according to one of Claims 1 to 5, **characterized in that** in the first state of the fairing device (12) the movable flaps (14, 16) completely cover a coupling device which is arranged in the end region, and **in that** in the opened further state of the fairing device (12) the movable flaps (14, 16) permit use of the coupling device.

7. Fairing device according to Claim 6, **characterized in that** in the closed further state of the fairing device (12) the movable flaps (14, 16) cover the coupling device entirely or at least partially.

8. Rail vehicle which can be operated in an equivalent fashion alone or in a vehicle configuration in both directions of travel, having at least one fairing device (12) at its front region and/or rear region, **characterized in that** the at least one fairing device (12) is embodied according to at least one of the preceding claims.

9. Rail vehicle according to Claim 8, **characterized in that** the rail vehicle (10) has at least one coupling device which is covered in such a way that it can be opened by the fairing device (12).

10. Rail vehicle according to Claim 9, **characterized in that** this rail vehicle can be coupled to at least one further rail vehicle, which has at least one corresponding coupling device and at least one identical fairing device (12), to form a train configuration.

## Revendications

1. Dispositif (12) de panneautage pour une zone d'extrémité constituée en zone de proue et en zone de poupe d'un véhicule (10) ferroviaire, qui, seul ou dans un convoi de véhicules, peut fonctionner d'une manière équivalente dans les deux sens de marche, comprenant des volets (14, 16) mobiles, qui, dans un premier état du dispositif (12) de panneautage, forment, à la zone d'extrémité du véhicule (10) ferroviaire, une partie de la surface (18) extérieure fermée du véhicule (10) ferroviaire, le dispositif (12) de panneautage pouvant passer dans au moins un autre état, par un déplacement des volets (14, 16),
**caractérisé en ce**
**qu'**au moins l'un des volets (14, 16) mobiles forme, dans un autre état ouvert du dispositif (12) de panneautage et/ou dans un autre état fermé du dispositif (12) de panneautage, au moins une structure (24, 30) de déflecteur, faisant saillie de la surface (18) extérieure fermée du dispositif de panneautage dans le premier état.

2. Dispositif de panneautage suivant la revendication 1, **caractérisé en ce que** la structure de déflecteur ou au moins l'une des plusieurs structures (24, 30) de déflecteur forme un déflecteur de poupe pour le véhicule (10) ferroviaire.

3. Dispositif de panneautage suivant la revendication 1 ou 2, **caractérisé en ce que** la structure de déflecteur ou au moins l'une des structures (24) des plusieurs structures (24) de déflecteur est une structure de déflecteur pour diminuer des forces de poussée verticale.

4. Dispositif de panneautage suivant l'une des revendications 1 à 3, **caractérisé en ce que** la structure de déflecteur ou au moins l'une des plusieurs structures (24, 30) de déflecteur est une structure de déflecteur pour diminuer dans son ensemble la résistance à l'air du véhicule.

5. Dispositif de panneautage suivant l'une des revendications 1 à 4, **caractérisé en ce que** la structure de déflecteur ou au moins l'une des plusieurs structures (30) de déflecteur est une structure de déflecteur pour diminuer les vitesses d'écoulement dans la zone de la couche de forme.

6. Dispositif de panneautage suivant l'une des revendications 1 à 5, **caractérisé en ce que** les volets (14, 16) mobiles recouvrent, dans le premier état du dispositif (12) de panneautage, complètement un dispositif d'attelage monté dans la zone d'extrémité et **en ce que** les volets (14, 16) mobiles permettent, dans l'autre état ouvert du dispositif (12) de panneautage, un usage du dispositif d'attelage.

7. Dispositif de panneautage suivant la revendication 6, **caractérisé en ce que** les volets (14, 16) mobiles recouvrent en tout ou au moins en partie le dispositif d'attelage dans l'autre état fermé du dispositif (12) de panneautage.

8. Véhicule ferroviaire, qui, seul ou dans un convoi de véhicules, peut fonctionner d'une manière équivalente dans les deux sens de marche, comprenant au moins un dispositif (12) de panneautage en sa zone de proue et/ou de poupe, **caractérisé en ce que** le au moins un dispositif (12) de panneautage est constitué suivant l'une au moins des revendications précédentes.

9. Véhicule ferroviaire suivant la revendication 8, **caractérisé en ce que** le véhicule (10) ferroviaire a au moins un dispositif d'attelage, qui est recouvert, avec possibilité d'apparaître, par le dispositif (12) de panneautage.

10. Véhicule ferroviaire suivant la revendication 9, **caractérisé en ce que** le véhicule ferroviaire peut être attelé en un convoi de trains avec au moins un autre véhicule ferroviaire, qui a au moins un dispositif d'attelage correspondant et au moins un dispositif (12) de panneautage identique.
